**Europäisches Patentamt**

**European Patent Office**

**Office européen des brevets**

(19)

(11) Veröffentlichungsnummer: **0 097 233 B1**

(12) # EUROPÄISCHE PATENTSCHRIFT

(45) Veröffentlichungstag der Patentschrift:
07.01.87

(21) Anmeldenummer: 83104235.3

(22) Anmeldetag: 29.04.83

(51) Int. Cl.⁴: **H 04 B 3/44,** H 04 B 17/02

(54) Schaltungsanordnung zur Inbetriebnahme der Fernspeisung von elektrischen Verbrauchern.

(30) Priorität: 03.05.82 DE 3216497

(43) Veröffentlichungstag der Anmeldung:
04.01.84 Patentblatt 84/1

(45) Bekanntmachung des Hinweises auf die Patenterteilung:
07.01.87 Patentblatt 87/2

(84) Benannte Vertragsstaaten:
AT BE CH DE FR GB IT LI NL SE

(56) Entgegenhaltungen:
DE - A - 1 902 090
DE - A - 2 910 500
DE - B - 1 157 663
DE - B - 2 620 348
US - A - 3 860 769

SIEMENS REVIEW XLI, SPECIAL ISSUE
"COMMUNICATIONS ENGINEERING", 1974, Seiten
127-130, Erlangen, DE., J. KNESEWITSCH et al.:
"Power-feeding facilities for main stations of coaxial
cable routes"

(73) Patentinhaber: **Siemens Aktiengesellschaft Berlin und München, Wittelsbacherplatz 2, D-8000 München 2 (DE)**

(72) Erfinder: **Ziegler, Alfred, Dipl.-Ing., Laimer Platz 1, D-8000 München 21 (DE)**
Erfinder: **Musil, Gerhard, Dipl.-Ing., Ludwig-Braille-Strasse 8, D-8000 München 70 (DE)**

## Beschreibung

Die Erfindung bezieht sich auf ein wie im Oberbegriff des Patentanspruches 1 angegebenes Schaltungsanordnung zur Inbetriebnahme der Fernspeisung von elektrischen Verbrauchern mittels Gleichstrom-Reihenspeisung.

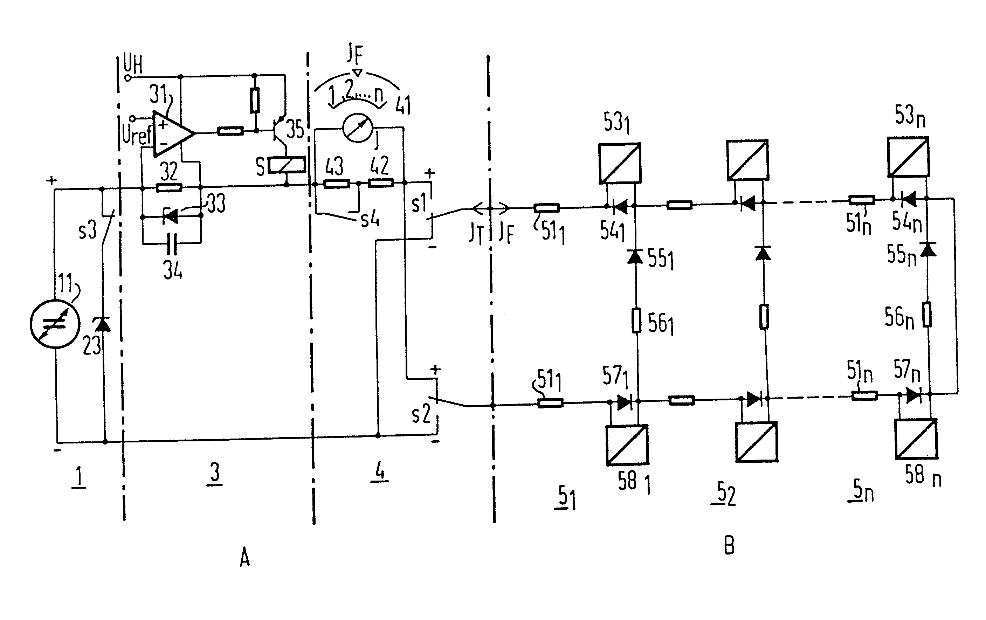

Eine solche Schaltungsanordnung ist bereits aus der Siemens Review XLI (1974), Special Issue, Communications Engineering, 1974, Seite 128, rechte Spalte, Abs. 2 bis Seite 129, linke Spalte, Abs. 2 und Fig. 2, bekannt.

Bei der bekannten Schaltungsanordnung wird der Fernspeisestrom mit Hilfe eines Relais überwacht. Fällt der Strom unter 50% des Nennwertes, so schaltet das Relais eine Z-Diode zwischen die beiden Adern des Fernspeisekreises, die die Speisespannung auf einen ungefährlichen Wert von 60 Volt begrenzt. In diesem Betriebszustand wird der Widerstand der Fernspeiseschleife gemessen. Liegt der Schleifenwiderstand in einem vorgegebenen Bereich, so wird die Z-Diode vom Fernspeisekreis abgegrenzt, so dass die Fernspeisung in Betrieb genommen wird. Zusätzlich ist eine Gleichstrom-Fehlerortung vorgesehen. Zur Fehlerortung speist das Fernspeisegerät einen konstanten Gleichstrom in die Fernspeiseschleife, der eine zum Fernspeisestrom entgegengesetzte Polarität hat.

Ferner ist z.B. aus der DE-AS 1 902 090 bekannt, bei der Fernspeisung von elektrischen Verbrauchern Vorrichtungen zum selbsttätigen Schliessen der Fernspeiseschleife vor einer Unterbrechungsstelle, insbesondere sogenannte Schaltzusätze, zu verwenden. Derartige Vorrichtungen schliessen die Fernspeiseschleife über einen Querzweig, solange im weiterführenden Teil der Fernspeiseschleife kein Strom vorgegebener Grösse gemessen wird. Auf diese Weise wird bei der Inbetriebnahme der Fernspeisung ein Abschnitt der Fernspeisestrecke nach dem anderen geprüft und gegebenenfalls aufgeschaltet. Dabei lässt sich ohne weiteres vermeiden, dass die Fernspeisung in Betrieb genommen wird, wenn an einer Unterbrechungsstelle ein Widerstand anliegt, der einen vorgegebenen, dem Körperwiderstand des Menschen entsprechenden Widerstandswert erreicht oder gar überschreitet.

Eine weitere Ausführungsform einer Vorrichtung zum Schliessen einer Fernspeiseschleife vor einer Unterbrechungsstelle geht aus der DE-AS 1 154 525 hervor.

Andererseits kann man eine Einrichtung zur Fernspeisung von elektrischen Verbrauchern mittels Gleichstrom-Reihenspeisung z.B. im Hinblick auf einen begrenzten Einbauraum ohne solche Schaltzusätze aufbauen. Bei der Inbetriebnahme von derartigen Fernspeisestrecken muss das Fernspeisegerät in der speisenden Stelle auf den Schleifenwiderstand der kompletten Strecke den Fernspeisestrom aufschalten. Hierbei ist aber aus Personenschutzgründen zu vermeiden, dass eine Aufschaltung auch dann erfolgt, wenn an einer Unterbrechungsstelle der Fernspeisekreis durch Berührung über den Körperwiderstand des Menschen geschlossen ist.

Solange der Fernspeisestrom so niedrig ist, dass er einen bei Berührung zulässigen Wert nicht überschreitet, z.B. 40 mA, kann die Aufschaltung ohne zusätzliche Massnahmen vorgenommen werden.

Bei hohen Fernspeiseströmen wird jedoch vor der Inbetriebnahme zweckmässigerweise überprüft, ob die Speiseschleife vollständig geschlossen ist und nicht etwa an einer Unterbrechungsstelle durch Berührung überbrückt ist. Hierbei besteht die Schwierigkeit, dass der Schleifenwiderstand einer vollständigen Fernspeisestrecke, insbesondere bei niedrigen Prüfspannungen oder -strömen, weit höhere Werte aufweist als der Körperwiderstand, der z.B. mit $2000\Omega$ angenommen werden kann. Es können sich somit Schwierigkeiten dadurch ergeben, dass bei Prüfung der gesamten Fernspeiseschleife eine intakte Schleife nicht mit ausreichender Sicherheit von einer Fernspeiseschleife unterschieden werden kann, bei der eine Unterbrechungsstelle durch einen Körperwiderstand überbrückt ist. Von besonderem Nachteil kann dabei sein, dass mit Rücksicht auf die gewünschte Prüfung die Reichweite der Fernspeisung und der spezifische Widerstand der Fernspeisestrompfade begrenzt sind.

Aufgabe der Erfindung ist es daher, eine Schaltungsanordnung zur Inbetriebnahme der Fernspeisung von elektrischen Verbrauchern zu schaffen, die eine, insbesondere selbsttätige, ungefährliche Inbetriebnahme langer Fernspeisestrecken ohne Vorrichtungen zum selbsttätigen Schliessen der Fernspeiseschleife vor einer Unterbrechungsstelle unabhängig vom Widerstandswert der Verbraucher gewährleistet.

Gemäss der Erfindung wird die Schaltungsanordnung zur Lösung dieser Aufgabe in der im kennzeichnenden Teil des Patentanspruches 1 angegebenen Weise ausgebildet.

Dabei wird die Überprüfung der Fernspeiseschleife vor Inbetriebnahme nicht in der normalen Polung vorgenommen, bei der der Gleichstrom-Eingangswiderstand der Verbraucher bzw. Zwischenstellen voll wirksam ist, sondern in umgekehrter Polung. Da der praktisch nur noch vom relativ geringen Kupferwiderstand der Fernspeiseleitung bestimmte Widerstand der Fernspeiseschleife durch die Querzweige noch weiter verringert wird, lässt sich die Schaltungsanordnung auch bei Fernspeiseschleifen anwenden, die für sich allein bzw. ohne Querzweige bei der Prüfung einen Widerstand aufweisen, der bereits im Bereich des Körperwiderstandes liegt. Es lassen sich daher in vorteilhafter Weise besonders lange Fernspeiseschleifen mit der gewünschten Sicherheit in Betrieb nehmen.

Die Messung des Schleifenwiderstandes kann dabei mit Hilfe einer eingeprägten Spannung und Messung des Stromes oder mit Hilfe eines eingeprägten Stromes und Messung der Spannung erfolgen. Die parallel zu den Verbrauchern liegenden Dioden können durch eine oder mehrere in Serie geschaltete Diodenstrecken oder durch Z-Dioden gebildet sein und ggf. zur Begrenzung oder Stabilisierung der Verbraucherspannung dienen. Für den Fall, dass die Verbraucher durch die parallel geschaltete Diode nicht ausreichend gegen Speisespannungen der falschen Polarität geschützt sind, können zusätzlich in Serie zu den Verbrauchern Dioden angebracht werden, die für den Fernspeisestrom in Durchlassrichtung gepolt sind. Eine derartige Anordnung geht z.B. aus der DE-AS 1 157 663 hervor.

Die Schaltungsanordnung ist zweckmässigerweise derart ausgebildet, dass die Speisestelle einen durch eine Anordnung zur Messung des Schleifenwiderstandes steuerbaren Umschalter zum verpolten Anschliessen des Fernspeisekreises an die Speisevorrichtung enthält. Die Anordnung zur Messung des Schleifenwiderstandes und der steuerbare Umschalter können mit der Speisevorrichtung bzw. mit dem Fernspeisegerät baulich vereinigt oder in einer zusätzlichen Baueinheit der Speisestelle untergebracht werden. Zweckmässigerweise ist die Speisevorrichtung von einer Konstantstromquelle auf eine Konstantspannungsquelle umschaltbar.

Die Querzweige enthalten dabei zweckmässigerweise eine Serienschaltung aus einem ohmschen Widerstand und einer für den Fernspeisestrom in Sperrichtung gepolten Diode. In vorteilhafter Weise können die Querzweige zugleich Bestandteil einer Einrichtung zur Fehlerortung sein.

Eine Fernspeiseeinrichtung, deren Zwischenverstärker in einer Reihenschaltung mit konstantem Gleichstrom betrieben werden und bei der im Falle einer Streckenunterbrechung eine Ortung der Fehlerstelle von der speisenden Stelle aus möglich ist, geht z.B. aus der DE-AS 1 157 663 hervor. Dabei ist in jeder Zwischenstelle ein Widerstand in Reihe mit einer zur Fernspeisespannung umgekehrt gepolten Diode zwischen die beiden Fernspeisestrompfade geschaltet. Im Fehlerfall wird in der Speisestelle mit einer ungefährlichen Spannung von z.B. 60 V mit zur Fernspeisespannung umgekehrter Polung der Eingangswiderstand des verbleibenden Streckenteiles gemessen. Aus dem Strom lässt sich auf die Lage des unterbrochenen Feldes schliessen. Anstelle solcher Messwiderstände können in den Zwischenstellen auch Konstantstrom-Dioden vorgesehen sein (DE-AS 2 620 348).

Die Fehlerortung kann mit Hilfe einer Konstantstromquelle oder einer Konstantspannungsquelle in Verbindung mit einer Spannungs- bzw. Strommessung vorgenommen werden.

Von besonderem Vorteil für die erfindungsgemässe Schaltungsanordnung ist, dass auf Strecken, bei denen zur Fehlerortung die Leitwertsmessung angewendet wird, bei dieser Prüfung der Leitwert der parallelliegenden Messwiderstände den Eingangswiderstand der Fernspeiseschleife weiter herabsetzt. Es ist dann vorteilhaft, den Wert des Messwiderstandes, soweit es die Messgenauigkeit der Fehlerortung zulässt, so niedrig zu wählen, dass ein möglichst geringer Wert für den Eingangswiderstand der Speiseschleife erreicht wird. Damit kann auch in Fällen, in denen der Kupferwiderstand allein schon etwa die Grösse des Körperwiderstandes erreicht, noch ein ausreichender Unterschied zwischen Strecken-Eingangswiderstand und Körperwiderstand erzielt werden.

Auf Strecken, bei denen zur Fehlerortung die Leitwertsmessung angewendet wird, bedeutet diese Prüfung der Strecke vor Inbetriebnahme keinen Mehraufwand für das Fernspeisegerät, da im Falle einer Streckenunterbrechung die Ortungsmessung auf nahezu gleiche Weise, insbesondere bei Verwenden der gleichen Prüfspannung, erfolgt. Dieser Umstand ermöglicht auch eine Automatisierung des Prüf- und des Ortungsvorganges mit nur geringem Aufwand.

In weiterer Ausgestaltung der Erfindung wird die Schaltungsanordnung derart ausgebildet, dass für die Prüfung des Schleifenwiderstandes und zur Fehlerortung ein und dieselbe Konstantspannungsquelle oder Konstantstromquelle vorgesehen ist. In Weiterbildung der Erfindung ist vorgesehen, dass die Speisestelle ein den im Fernspeisekreis fliessenden Strom messendes Relais enthält und dass Umschaltekontakte des Relais die Fernspeisestrecke im stromlosen Zustand mit vertauschten Fernspeisestrompfaden an die Gleichstromquelle anschliessen. Das Relais lässt sich in vorteilhafter Weise auch dazu ausnutzen, dass die Empfindlichkeit eines in der Speisestelle enthaltenen, den im Fernspeisekreis fliessenden Strom messenden Anzeigeinstrumentes umgeschaltet wird.

Die Erfindung wird anhand des in der Figur dargestellten Ausführungsbeispieles näher erläutert.

Die Figur zeigt eine Schaltungsanordnung zur automatischen ungefährlichen Inbetriebnahme einer Fernspeisestrecke ohne Schaltzusätze mit selbsttätiger Fehlerortung durch Leitwertmessung bei Streckenunterbrechung.

Die Fernspeiseschleife B dient zur Fernspeisung von Zwischenverstärkern einer Vierdraht-Nachrichtenübertragungsstrecke, die in der Figur nicht näher dargestellt sind. Die Fernspeiseschleife wird nur von einer Seite her gespeist und weist daher in dem der Speisestelle abgewandten Ende eine direkte Verbindung der beiden Adern bzw. Fernspeisestrompfade auf.

In jedem Fernspeisestrompfad sind die Speisespannungseingänge der Gleichstromumrichter $53_1 \ldots 53_n$ bzw. $58_1 \ldots 58_n$ der zu einer Übertragungsrichtung gehörenden Verstärker eingeschleift. Die Gleichstromumrichter werden über eine eigene Fernspeiseleitung oder z.B. jeweils über den Kabelinnenleiter in Verbindung mit Fernspeiseweichen gespeist. Gegebenenfalls können anstelle der Umrichter die Versorgungsspannungseingänge der Verstärker selbst oder andere ferngespeiste Verbraucher, z.B. Fernwirkeinrichtungen oder dergleichen, im Fernspeisekreis eingefügt sein. Gegebenenfalls kann je Zwischenstelle nur ein einziger Verbraucher vorhanden sein. Die Kabelwiderstände der Speiseab-

schnitte bzw. Verstärkerfelder $5_1...5_n$ sind mit $51_1...51_n$ bezeichnet. Die Verbraucher sind durch Dioden $54_1...54_n$ bzw. $57_1...57_n$ überbrückt. Diese Dioden sind derart gepolt, dass sie für den Fernspeisestrom $I_F$ gesperrt sind.

Von der Speisestelle A aus gesehen befindet sich am Ende jedes Speiseabschnittes bzw. nach jeder die Verbraucher enthaltenden Zwischenstelle ein Querzweig, der aus einem ohmschen Widerstand $56_1...56_n$ und einer dazu in Serie geschalteten Diode $55_1...55_n$ besteht. An dem der Speisestelle A abgewandten Ende ist die Fernspeiseschleife abgeschlossen.

Die Dioden $55_1...55_n$ sind für den Fernspeisestrom $I_F$ in Sperrichtung gepolt. Die in den Querzweigen befindlichen Widerstände $56_1...56_n$ dienen in an sich bekannter Weise zur Fehlerortung durch Leitwertmessung. Auch ohne eine Leitwertmessung können derartige Querzweige vorgesehen sein, um die Prüfung zu erleichtern. Gegebenenfalls können sie auch entfallen.

Die Speisestelle A enthält die Speisevorrichtung 1, die eine Konstantstromquelle 11 aufweist. Parallel zur Stromquelle 11 liegt ein Stromzweig, der aus dem Ruhekontakt S3 eines Relais S und einer Z-Diode 23 besteht. Übersteigt bei nicht erregtem Relais S die Ausgangsspannung der Stromquelle 11 die Zenerspannung der Z-Diode 23, so wird die Ausgangsspannung der Speisevorrichtung 1 auf z.B. 60 V begrenzt.

In Serie zur Stromquelle 11 liegt im Hauptstromkreis ein Widerstand 32. An den als Strommesswiderstand dienenden Widerstand 32 ist ein Schwellwertschalter 31 angeschlossen, der den Spannungsabfall am Widerstand 32 mit einer Referenzspannung $U_{Ref}$ vergleicht. Überschreitet der Prüfstrom $I_T$ einen vorgegebenen Wert, so wird über einen Transistor 35 das Relais S erregt.

Der Schwellwertschalter 31 ist durch eine Parallelschaltung aus einer Z-Diode 33 und einem Kondensator 34 gegen Überspannungen geschützt. Der Kondensator 34 verhindert ein Ansprechen des Schwellwertschalters durch Störimpulse bei Beeinflussung der Strecke.

In Serie zum Widerstand 32 liegt eine Messeinrichtung 4. Diese besteht aus einem Strommesser 41 und einem Shunt, gebildet durch die Widerstände 42 und 43. Ein Teil 42 des Shunts lässt sich mit Hilfe eines Kontaktes s4 des Relais S kurzschliessen.

Das Relais S hat ferner zwei Umschaltkontakte s1, s2, deren Scheitel jeweils an einem der beiden Fernspeisestrompfade liegt. Bei nicht erregtem Relais S ist der Scheitel des Umschalters S1 mit dem Minuspol der Stromquelle 11 und der Scheitel des Umschaltekontaktes S2 über die Messvorrichtung 4 und den Widerstand 32 mit dem Pluspol der Stromquelle 11 verbunden. Bei erregtem Relais S ist der Scheitel des Umschaltekontaktes S1 über die Messvorrichtung 4 und den Widerstand 32 mit dem Pluspol der Stromquelle 11, der Scheitel des Umschaltekontaktes S2 mit dem Minuspol der Stromquelle 11 verbunden.

Die Prüfung der Fernspeiseschleife erfolgt mit einer Spannung ungefährlicher Grösse, z.B. mit 60 V. Abhängig vom Zustand des Fernspeisekreises ergeben sich folgende Fälle:

1. Prüfung bei intakter Fernspeiseschleife
Der Prüfstrom $I_T$ beträgt ohne Berücksichtigung der Querzweige

$$I_T = \frac{U_T - 2n \cdot U_D}{n \cdot R_K}$$

Dabei bedeuten
$U_T$ eine ungefährliche Prüfspannung von z.B. 60 V
$n$ die Zahl der Zwischenstellen
$U_D$ die Schwellenspannung der Dioden $54_1...54_n$ und $57_1...57_n$
$R_K$ der Kabelwiderstand $51_1...51_n$ eines Fernspeiseabschnittes.

Bei diesem Stromwert wird der normale Fernspeisebetrieb durch die Vorrichtung 3 und 4 veranlasst. Mit Querzweigen ergibt sich ein entsprechend grösserer Strom.

2. Prüfung und Fehlerortung bei unterbrochener Fernspeiseschleife
In diesem Fall ist

$$I_T < \frac{U_T - 2nU_D}{nR_K}$$

Die Ortung erfolgt durch Strommessung, wobei der Strom etwa proportional

$$n \cdot \frac{U_T}{R_Q}$$

ist. Dabei bedeutet $R_Q$ den Widerstandswert eines Querzweiges, gebildet aus den Widerständen $56_1...56_n$ und den Dioden $55_1...55_n$.

3. Nach m Zwischenstellen unterbrochene Fernspeiseschleife mit Überbrückung durch einen Körperwiderstand $R_B$, wobei $m < n$ ist, ebenfalls ohne Berücksichtigung der Querzweige

$$I_T = \frac{U_T - 2 m U_D}{mR_K + R_B}$$

Der in diesem Fall bei unveränderter Prüfspannung $U_T$ fliessende Prüfstrom $I_T$ ist im allgemeinen kleiner als bei der Prüfung der intakten Fernspeiseschleife B.

4. Bei hohem Schleifenwiderstand, d.h. grossem $n R_K$, ist es möglich, dass im Falle einer Unterbrechung im vordersten Teil der Strecke, d.h. für den Fall $m \ll n$, und Überbrückung durch einen Körperwiderstand $R_B$ der Prüfstrom $I_T$ nicht kleiner ist als der Strom bei Prüfung der intakten Fernspeiseschleife B, d.h. $m R_K + R_B < n R_K$, wenn $U_D$ vernachlässigt wird.

In solchen Fällen kann durch Einfügung von Querwiderständen $R_Q$ erreicht werden, dass auch in diesem Fall der Prüfstrom $I_T$ immer kleiner ist, als der Strom bei intakter Fernspeiseschleife.

Im Ausgangskreis des Gerätes ist ein Relais S mit Umschaltekontakten vorgesehen, das im stromlosen Zustand die Strecke mit umgekehrter Polung anschliesst und die Ausgangsspannung des Speisegerätes in bekannter Weise auf einen niedrigen Wert reduziert. Bei Inbetriebnahme des Gerätes wird mit dieser Spannung der – verpolte – Streckeneingangsstrom gemessen. Ist die Strecke unterbrochen, so liefert die Stromanzeige sofort den Fehlerort. Ist die Strecke in Ordnung, dann übersteigt der Prüfstrom einen kritischen Wert, bei dem durch Erregung des Relais S die Strecke richtig gepolt angeschlossen und die Begrenzung der Speisespannung auf den niedrigen Prüfwert aufgehoben wird. Das Speisegerät arbeitet voll auf die Strecke. Auch die Empfindlichkeit des Strom-Messinstruments wird entsprechend umgeschaltet.

Im Falle einer Streckenunterbrechung sinkt der Ausgangsstrom unter einen kritischen Wert, bei dem dann über das Umschalte-Relais sowohl die Speisespannung auf den niedrigen Prüfwert reduziert als auch die Strecke umgepolt an die Prüfspannung gelegt wird. Gleichzeitig wird auch der Messwiderstand für den Strommesser so umgeschaltet, dass das Instrument das fehlerhafte Feld anzeigen kann.

Die Funktion des Umschalte-Relais S kann gegebenenfalls durch eine gleichwirkende Schaltung mit Halbleitern ersetzt werden.

**Patentansprüche**

1. Schaltungsanordnung zur Inbetriebnahme der Fernspeisung von elektrischen Verbrauchern mittels Gleichstrom-Reihenspeisung, insbesondere von Zwischenstellen in Einrichtungen der Nachrichtenübertragungstechnik, mittels einer in einer Speisestelle vorgesehenen, eine Gleichstromquelle enthaltenden Speisevorrichtung, wobei zunächst ein Widerstand der Fernspeiseschleife geprüft und der Fernspeisestrom erst eingeschaltet wird, sobald in der Speisestelle ein unter einem vorgegebenen Betrag liegender Wert des Widerstandes der Fernspeiseschleife festgestellt wird, dadurch gekennzeichnet, dass bei einseitiger Speisung der frei von Vorrichtungen zum selbsttätigen Schliessen der Fernspeiseschleife vor einer Unterbrechungsstelle aufgebauten Fernspeiseschleife (B) parallel zu den Verbrauchern für den Fernspeisestrom in Sperrrichtung gepolte Dioden ($53_1$, $58_1$…$53_n$, $58_n$; $53'_1$…$53'_n$, $58'_n$) angeordnet sind und die Prüfung des Widerstandes der Fernspeiseschleife derart vorgenommen wird, dass der dabei fliessende Strom bezogen auf den Fernspeisestrom ($I_F$) entgegengesetzt gerichtet ist, und dass die Fernspeiseschleife (B) mit Querzweigen versehen ist, die nur für Ströme von der Richtung des Prüfstromes (I) leitend sind, und dass die Querzweige derart bemessen sind, dass der Prüfstrom ($I_T$) bei unterbrochener, an der Unterbrechungsstelle durch einen Körperwiderstand überbrückter Fernspeiseschleife kleiner ist als der Strom bei intakter Fernspeiseschleife.

2. Schaltungsanordnung nach Anspruch 1, dadurch gekennzeichnet, dass die Speisestelle (A) einen durch eine Anordnung (3) zur Messung des Schleifenwiderstandes steuerbaren Umschalter (s1, s2) zum verpolten Anschliessen des Fernspeisekreises (B) an die Speisevorrichtung enthält.

3. Schaltungsanordnung nach Anspruch 2, dadurch gekennzeichnet, dass die Speisevorrichtung von einer Konstantstromquelle auf eine Konstantspannungsquelle umschaltbar ist.

4. Schaltungsanordnung nach einem der Ansprüche 1 bis 3, dadurch gekennzeichnet, dass die Querzweige eine Serienschaltung aus einem ohmschen Widerstand ($56_1$…$56_n$) und einer für den Fernspeisestrom in Sperrrichtung gepolten Diode ($55_1$…$55_n$) enthalten.

5. Schaltungsanordnung nach einem der Ansprüche 1 bis 4, dadurch gekennzeichnet, dass die Querzweige zugleich Bestandteil einer Einrichtung zur Fehlerortung sind.

6. Schaltungsanordnung nach Anspruch 5, dadurch gekennzeichnet, dass für die Prüfung des Schleifenwiderstandes und zur Fehlerortung ein und dieselbe Konstantspannungsquelle oder Konstantstromquelle vorgesehen ist.

7. Schaltungsanordnung nach einem der Ansprüche 1 bis 6, dadurch gekennzeichnet, dass die Speisestelle ein durch den im Fernspeisekreis fliessenden Strom steuerbares Relais (S) enthält und dass Umschaltekontakte (s1, s2) des Relais (S) die Fernspeisestrecke im stromlosen Zustand mit vertauschten Fernspeisestrompfaden an die Gleichstromquelle anschliessen.

8. Schaltungsanordnung nach Anspruch 7, dadurch gekennzeichnet, dass die Empfindlichkeit eines in der Speisestelle enthaltenen, den im Fernspeisekreis fliessenden Strom messenden Anzeigeinstrumentes (41) mit Hilfe des Relais (S) umschaltbar ist.

**Claims**

1. A circuit arrangement for putting a remote power supply to electrical loads into operation via a series d.c. supply, in particular intermediate stations in telecommunication transmission devices, by means of a supply device arranged at a supply point and comprising a d.c. source, the impedance of the remote supply loop is initially tested and the remote supply current only switched on when the impedance of the remote supply loop, as determined at the supply point, is below a predetermined value, characterised in that with unilateral feeding of the remote supply loop (8), which is free from devices for automatic closure of the remote supply loop before a point of interruption, diodes ($53_1$, $58_1$…$53_n$, $58_n$; $53'_1$…$53'_n$, $58'_n$) poled in the blocking direction are arranged parallel to the loads for the remote supply current, and the impedance of the remote supply loop is tested in such a manner that the traversing current is directed in opposed relationship to the remote supply current ($I_F$), and that the remote supply loop (8) is provided with transverse branches which are only conductive in the direction for testing current (I), and the transverse branches are dimensioned such that in the event of an interrupted remote supply loop bridged by the impedance of a human body at the point of interruption, the testing current (I) is smaller than the current in the event of an intact remote supply loop.

2. A circuit arrangement as claimed in Claim 1, characterised in that the feeding point (A) comprises a change-over switch (s1, s2) controlled by a loop-impedance measuring arrangement (3) and serves for the poled connection of the remote supply circuit (B) to the supply device.

3. A circuit arrangement as claimed in Claim 2, characterised in that the supply device can be changed over from a constant current source to a constant voltage source.

4. A circuit arrangement as claimed in one of Claims 1 to 3, characterised in that the transverse branches comprise a series connection consisting of resistance ($56_1 \ldots 56_n$) and a diode ($55_1 \ldots 55_n$) poled in the blocking direction for the remote supply current.

5. A circuit arrangement as claimed in one of Claims 1 to 4, characterised in that the transverse branches act simultaneously as part of a device for error location.

6. A circuit arrangement as claimed in Claim 5, characterised in that one constant voltage source or constant current source is arranged for testing the loop impedance and the error location.

7. A circuit arrangement as claimed in one of Claims 1 to 6, characterised in that the supply point comprises a relay (S) controllable by the current flowing through the remote supply circuit, and that switching contacts (s1, s2) of the relay (S) connect the remote supply section to the direct current source by exchanged remote feeding paths in the currentless state.

8. A circuit arrangement as claimed in Claim 7, characterised in that the sensitivity of an indicating instrument (41) provided at the supply point to measure the current flowing in the remote supply circuit can be changed by the relay (S).

**Revendications**

1. Montage pour la mise en marche de la téléalimentation de consommateurs d'électricité à l'aide d'une alimentation série en courant continu, en particulier de postes intermédiaires dans des installations de la technique de transmission d'informations, à l'aide d'un dispositif d'alimentation prévu dans un poste d'alimentation et comportant une source de courant continu, du genre dans lequel on procède d'abord au contrôle d'une résistance de la boucle de téléalimentation et ensuite au branchement du courant de téléalimentation dès qu'on constate au poste d'alimentation une valeur de la résistance de la boucle de téléalimentation, qui se situe en dessous d'une valeur prédéterminée, caractérisé par le fait que dans le cas d'une alimentation unilatérale de la boucle de téléalimentation (B) qui est dépourvue du dispositif pour la fermeture automatique de la boucle de téléalimentation et qui est établie en amont d'un emplacement d'interruption, se trouvent disposées, en parallèle aux consommateurs, des diodes ($53_1$, $58_1 \ldots 53_n$; $53'_1 \ldots 53'_n$, $58'_n$) montées dans le sens du blocage du courant d'alimentation, et le contrôle de la résistance de la boucle de téléalimentation est opéré de telle façon que le courant qui passe alors s'écoule en sens opposé à celui du courant de téléalimentation, et que la boucle de téléalimentation (B) est pourvue de branches transversales qui ne sont conductrices que pour des courants ayant la direction du courant de contrôle (I), et que ces branches transversales sont dimensionnées de telle façon que le courant de contrôle ($I_T$) est, dans le cas d'une boucle de téléalimentation interrompue, shutée à l'emplacement d'interruption par la résistance d'un corps, inférieur au courant qui passe dans une boucle de téléalimentation intacte.

2. Montage selon la revendication 1, caractérisé par le fait que le poste d'alimentation (A) comporte un commutateur (s1, s2) qui est susceptible d'être commandé par un dispositif (3) servant à la mesure de la résistance de la boucle, en vue du branchement inversé du circuit de téléalimentation (B) au dispositif d'alimentation.

3. Montage selon la revendication 2, caractérisé par le fait que le poste d'alimentation est susceptible d'être commuté d'une source de courant constant sur une source de tension constante.

4. Montage selon l'une des revendications 1 à 3, caractérisé par le fait que les branches transversales comportent un montage série constitué par une résistance ohmique ($56_1 \ldots 56_n$) et par une diode ($55_1 \ldots 55_n$) monté dans le sens du blocage du courant de téléalimentation.

5. Montage selon l'une des revendications 1 à 4, caractérisé par le fait que les branches transversales forment en même temps un élément constitutif d'un dispositif pour la localisation d'un défaut.

6. Montage selon la revendication 5, caractérisé par le fait que pour le contrôle de la résistance de boucle et pour la localisation d'un défaut, il est prévu une seule et même source de tension constante ou une seule et même source de courant constant.

7. Montage selon l'une des revendications 1 à 6, caractérisé par le fait que le poste d'alimentation comporte un relais (S) qui est susceptible d'être commandé par le courant qui passe dans le circuit de téléalimentation, et que les contacts de commutation (s1, s2) du relais (S), relient la voie de téléalimentation à l'état dépourvu de courant et avec des voies inversées pour le courant de téléalimentation, à la source de courant continu.

8. Montage selon la revendication 7, caractérisé par le fait que la sensibilité d'un instrument indicateur (41) qui est contenu au poste d'alimentation et qui mesure le courant qui passe dans le circuit de téléalimentation, est susceptible d'être commuté à l'aide du relais (S).